# EUROPEAN PATENT SPECIFICATION

(11) **EP 2 404 126 B1**
(45) Date of publication and mention of the grant of the patent: **25.09.2013**
(21) Application number: 09786622.2
(22) Date of filing: 16.07.2009
(51) Int. Cl.: F24J 2/52, H01L 31/042, E04D 3/36, E04D 13/18

(54) **MOUNTING SECTION FOR SOLAR PANELS**
MONTAGEABSCHNITT FÜR SONNENPANEELE
SECTION DE MONTAGE POUR PANNEAU SOLAIRE

(43) Date of publication of application: 11.01.2012
(73) Proprietor: Iscom S.p.A., 37026 Pescantina, VR (IT)
(72) Inventor: MENEGOLI, Mauro, I-37026 Pescantina (Verona) (IT)
(74) Representative: Feltrinelli, Secondo Andrea
(86) International application number: PCT/IB2009/053093
(87) International publication number: WO 2011/007201

(56) References cited:
- EP-A- 1 947 402
- EP-A2- 1 306 627
- EP-A2- 1 775 777
- EP-B1- 1 885 968
- DE-A1-102005 019 857
- DE-B3- 10 309 445
- DE-U1- 20 209 892
- FR-A1- 2 561 362
- US-A- 4 390 010

## Description

This invention relates to a mounting section for solar panels.

Industrial or residential roof coverings in the form of modular sheets increasingly require the integration and coupling of photovoltaic panels to satisfy the growing need for alternative energy sources.

To fix a panel to the covering a highly resistant and strong fixing system is needed, particularly to resist the wind which could pull the panels off. Although they should as far as possible avoid damaging the roof covering, which is the ultimate barrier for the infiltration of water and other atmospheric agents, many systems require drilling or fixing that may damage the roof covering itself. Every hole or slit weakens the roof, and long, expensive and complicated repairs are necessary, above all in consideration of the fact that to do so the photovoltaic system needs to be removed, compromising production.

The covering on which panels are mounted also requires a structure which guarantees access during the inevitable periodical maintenance operations, when a person has to reach and walk on the structure. The structure must support this weight but must also facilitate movement and control/maintenance operations, which has not always been possible until now.

Patent no. EP 1 775 777 discloses a section bar suitable for fixing solar panels to an underlying roof covering, having a cross section which comprises two opposite seats in which the respective ends of two panels are held. The section bar further comprises two opposite portions which can be snap engaged onto two respective curved parts of the roof covering.

Utility model no. DE 20209892 U1 discloses a hook element for fixing solar panel to an underlying roof covering, having a cross section, comprising an upper clip portion having a slot in which an end of the panel is held and a lower clasp portion suitable to engage the border of the upper surface of the roof covering. Patent no. DE 10309445 B discloses a frame system, for the installation of solar energy units on a roof, that comprises two main-parts: four base frame elements, to be associated to the roof, and connecting elements, which have a U-shaped profile, to be interlocked onto a corresponding frame head provided at the top of the base frame element. Patent application no. EP 1947402 A discloses a support frame for solar panels comprising support feet over which some inclined spars are fixed. A plurality of transversal cross members are associated to the inclined spars by intermediary pieces. The support frame also includes a plurality of clamps for the fixing of solar panels. In particular, each clamp is provided with two parallel tabs extending from the lower side and suitable to be housed in a corresponding shaped grove provided along each cross member.

The main object of the invention is to improve the current state-of-the-art with a solar panel fixing system which does not damage the roof.

A further object is to obtain a fixing system that is resistant to strong moving or lifting forces.

In patent no. EP 1 885 968 the Applicant describes a covering structure for creating steel sheet roof coverings. This roof covering (see references in this document) is formed by the juxtaposition of profiled modules 2 which overlap to create a central protrusion (at the channel 25).

A further object of the invention is to provide a fixing system which is preferably compatible with the covering described in EP 1 885 968.

These objects are achieved with a mounting section according to claim 1.

Further characteristics and advantages of the invention will be made clearer by the description of a fixing system, together with the attached drawings, in which:
figure 1 shows a three-dimensional extended view of a system according to the invention;
figure 2 shows a vertical section view of the system shown in fig. 1;
figure 3 shows an enlarged detail of fig. 2;
figure 4 shows a detail of fig. 3 with a component part in a initial fastening phase;
figure 5 shows the component part of fig. 4 in a final fastening phase.

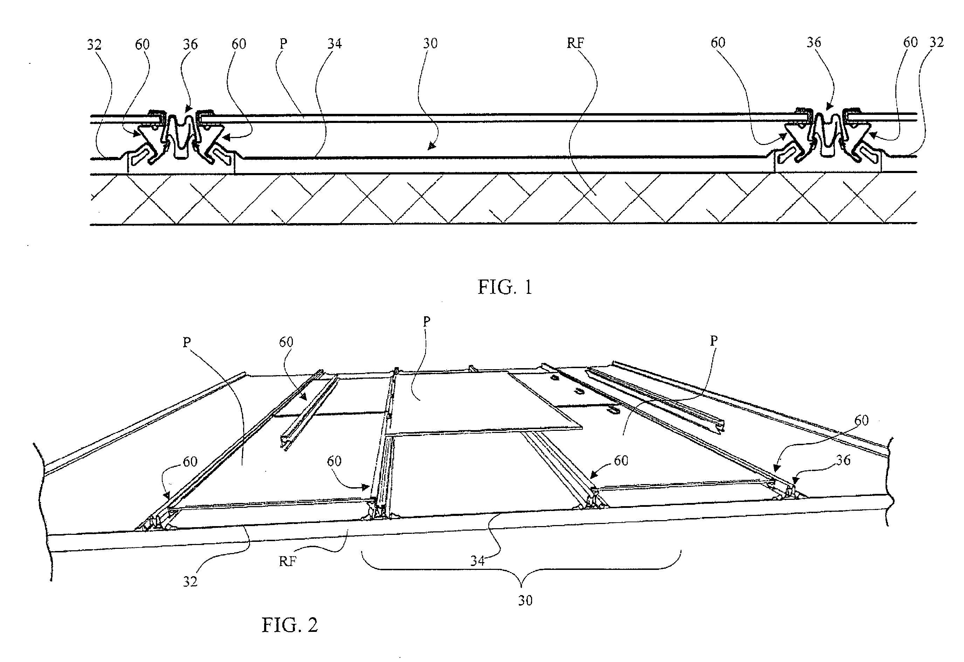

Figures 1 and 2 show the covering 30 of a roof RF formed by first section bars 32, 34 which are suitable for laying in a juxtaposed position and which, by being overlapped, create a rise 36. Second section bars 60 according to the invention can be snap-fitted onto the rise 36, and are then used to fix the solar panels P to the underlying covering 30. The covering 30 is that described in EP 1 885 968, but for the purposes of the invention any covering in which channels or reliefs can be used to fix the section bar 60 is suitable.

Each second section bar 60 has a cross section which comprises a panel-holding part, in which a seat S is formed which holds the end of the panel P, and a part, called the connecting part, which is suitable for snap-engaging onto a curved portion of the rise 36. This portion, in particular, in the figures is on the sides of the rise 36.

The connecting part comprises two distinct legs or end portions 62, 64 which can be snap-engaged onto the respective complementary curves of the rise 36. As it is simpler, easier and more reliable to mount, to fix the second section bar 60 on only one side of the rise 36, the portions 62, 64 are configured to engage onto the same side of the rise 36 (but could also be coupled to the top or to both sides of the rise 36).

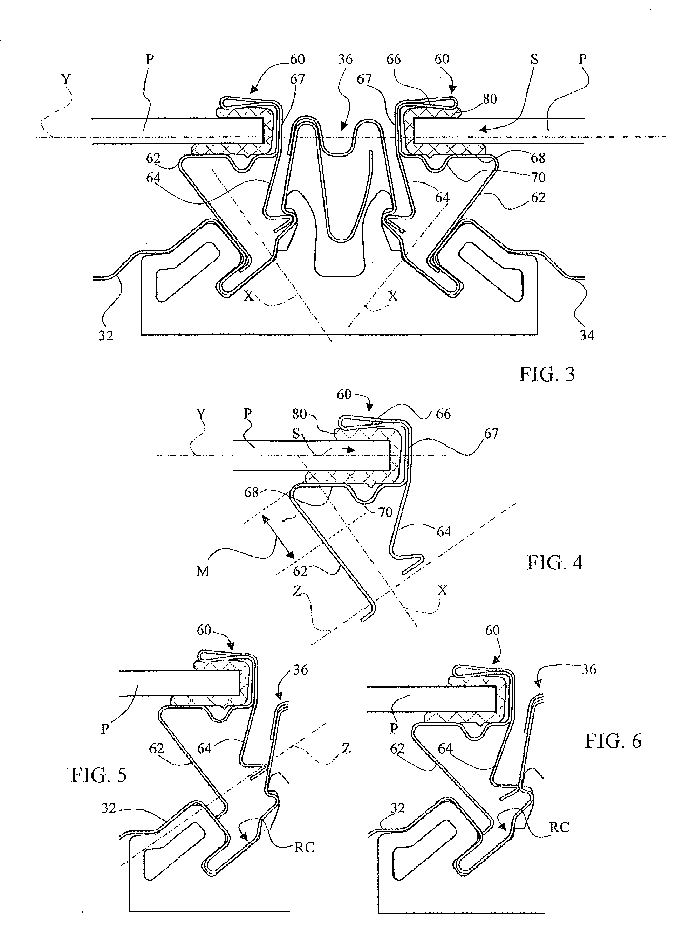

In fig. 5 the axial symmetry of the fixing system deriving from the use of two second section bars 60 on the sides of one rise 36 can be seen. Clearly a panel P is fixed between two protrusions 36 with two second section bars 60 mounted in a specular manner.

The portions 62, 64 are free ends of the second section bar 60 and comprise C- or U-shaped end-folds facing outwards or inwards to the second section bar 60. The purpose is to create hooked shapes or reliefs (folds in the portions 62, 64) which can then slot into or snap fit, by shape coupling, onto the grooves or protruding folds present on the side surface of the rise 36.

The seat S substantially has a C or U shaped section, and has two resting walls 66, 68, which support the larger surfaces of the panel P connected by a wall 67 which is approximately at right angles to them. The walls 66, 68 define the ends of the C or U, and are substantially parallel to each other and to a horizontal plane Y. The extension of the walls 66, 67, 68 can vary according to the size of the panel P and/or to best create one or more surfaces which act as a support. Preferably filling means are inserted between the walls 66, 67, 68 and the panel P, e.g. a layer 80 of silicon or a rubber shim, even only along some section bars of the photovoltaic module in order to avoid damaging the fastened surface of the panel P.

Preferably the resting wall 68, the lower one, has a local shaping that forms a cavity 70 which acts as a drainage channel for any water infiltrating between the panel P and the second section bar 60. A similar functional cavity can also be obtained in the walls 67, 66.

To facilitate the spacing from the rise 36 and to improve the adaptation of the second section bar 60 to any covering, each portion 62, 64 extends along one direction, see plane X, which is slanted with respect to the plane Y. This slant creates an angle which depends on the geometry of the covering plate to which the second section bar must be fastened, and preferably varies between 30 and 60 degrees, in particular it is 50 degrees. Therefore the portion 62 extends along the plane X by a distance approximately equal to that of the portion 64 plus a further length M (fig. 4), given approximately by the length of the wall 68 multiplied by sen (50°).

For the same reasons, the portions 62, 64 run along the plane X as far as is needed for both to end approximately on a common plane Z which is slanted with respect to the plane Y by a given angle. The resting walls 66, 68 should be maintained horizontal, adapting the slant of the second section bar 60 to that of the side of the rise 36.

The overall geometric construction in any case depends on the slant of the side of the rise 36.

The second section bar 60 should preferably be made from cold-drawn steel sheet using the same metal as the first section bars 32, 34, in order to prevent galvanic corrosion. Furthermore the use of the same material, in the event of pre-painted elements, avoids differences in colour between one element and the other and reduces any unwanted visual impact.

## Claims

1. Mounting section for solar panels, said mounting section comprising a roof covering (30) comprising first section bars (32,34) which are suitable for laying in a juxtaposed position and which, by being overlapped, create a rise (36), said rise (36) having a side surface comprising two grooves, said mounting section further comprising second section bars (60), for fixing solar panels (P) to said underlying roof covering (30), said second section bars (60) having a cross section which comprises a seat (S) in which the end of a panel is held,
**characterized in that**
each of said second section bar (60) comprises a part having two distinct free end portions (62,64) which are suitable for being snap-engaged onto said grooves of said rise (36).

2. Mounting section according to claim 1, in which the snap-engageable portions (62,64) consist of C- or U-shaped folds facing outwards or inwards to the second section bar (60).

3. Mounting section according to claim 1, in which said seat (S) has a C- or U-shaped section and has supporting walls (66, 68) for the larger surface of the panel (P) which are substantially parallel to each other.

4. Mounting section according to any of the preceding claims, comprising filling means (80) between the walls of the seat (S) and the panel (P).

5. Mounting section according to claim 4, in which said filling means comprise a layer of silicon or a rubber shim.

6. Mounting section according to any of the preceding claims, in which one or each of the supporting walls (66, 68) has a local shaping (70) which forms a cavity which acts as a drainage channel for any water infiltrating between the panel and the second section bar.

7. Mounting section according to any of the preceding claims, in which one or each of the free ends extends along a direction (X) which is slanted with respect to the plane (Y) containing the parallel walls (66, 68) of said seat.

8. Mounting section according to claim 7, in which said slant is approximately 50 degrees.

9. Mounting section according to any of the preceding claims, in which the free ends are of a length which allows them to end on a common plane (Z) which is slanted with respect to the plane containing the parallel walls of said seat.

## Patentansprüche

1. Montageabschnitt für Solarmodule, wobei dieser Montageabschnitt eine Dachabdeckung (30) umfasst, die erste Profilstangen (32, 34) umfasst, die nebeneinander liegen können und die, indem sie überlagert werden, eine Erhöhung (39) bilden, wobei diese Erhöhung (36) eine Seitenfläche aufweist, die zwei Nuten umfasst, wobei dieser Montageabschnitt ferner zweite Profilstangen (60) zum Befestigen von Solarmodulen (P) an der darunter liegenden Dachabdeckung (30) umfasst, wobei diese zweiten Profilstangen (60) einen Querschnitt aufweisen, der eine Aufnahme (S) umfasst, in dem das Ende eines Moduls gehalten wird,
**dadurch gekennzeichnet, dass**
jede dieser **zweiten** Profilstangen (60) einen Teil umfasst, der zwei verschiedene freie Endabschnitte (62, 64) aufweist, die in die Nuten der Erhöhung (36) eingeschnappt werden können.

2. Montageabschnitt nach Anspruch 1, bei dem die einschnappbaren Abschnitte (62, 64) aus C- oder U-förmig gebogenen Falzen bestehen, die nach außen oder nach innen zur zweiten Profilstange (60) gewandt sind.

3. Montageabschnitt nach Anspruch 1, bei dem die Aufnahme (S) einen C- oder U-förmigen Querschnitt hat und Stützwände (66, 68) für die größere Fläche des Moduls (P) aufweist, die im Wesentlichen zueinander parallel sind.

4. Montageabschnitt nach einem der vorhergehenden Ansprüche, der Füllmittel (80) zwischen den Wänden der Aufnahme (S) und dem Modul (P) umfasst.

5. Montageabschnitt nach Anspruch 4, bei dem die Füllmittel eine Lage aus Silikon oder ein Unterleggummi umfassen.

6. Montageabschnitt nach einem der vorhergehenden Ansprüche, bei dem eine oder jede der Stützwände (66, 68) eine örtliche Formung (70) aufweist, die einen Hohlraum bildet, der als Ablaufkanal für jegliches Wasser dient, das zwischen das Modul und die zweite Profilstange eindringt.

7. Montageabschnitt nach einem der vorhergehenden Ansprüche, bei dem sich eines oder jedes der freien Enden entlang einer Richtung (X) erstreckt, die zu der Ebene (Y) geneigt ist, welche die parallelen Wände (66, 68) der Aufnahme enthält.

8. Montageabschnitt nach Anspruch 7, bei dem die Neigung ungefähr 50 Grad beträgt.

9. Montageabschnitt nach einem der vorhergehenden Ansprüche, bei dem die freien Enden eine Länge haben, die es ihnen ermöglicht, in einer gemeinsamen Ebene (Z) zu enden, die zu der Ebene geneigt ist, welche die parallelen Wände der Aufnahme enthält.

## Revendications

1. Section de montage pour panneaux solaires, ladite section de montage comprenant une couverture de toit (30) comprenant des premières barres profilées (32,34) qui sont adaptées pour reposer dans une position juxtaposée et qui, en étant chevauchées, créent une élévation (39), ladite élévation (36) ayant une surface latérale comprenant deux rainures, ladite section de montage comprenant en outre des deuxièmes barres profilées (60), pour fixer des panneaux solaires (P) à ladite couverture de toit sous-jacente (30), lesdites deuxièmes barres profilées (60) ayant une section transversale qui comprend un siège (S) dans lequel l'extrémité d'un panneau est maintenue,
**caractérisée en ce que**
chacune desdites deuxièmes barres profilées (60) comprend une partie ayant deux portions d'extrémité libre distinctes (62,64) qui sont adaptées pour être engagées par encliquetage sur lesdites rainures de ladite élévation (36).

2. Section de montage selon la revendication 1, dans laquelle les portions engageables par encliquetage (62,64) comprennent des plis en forme de C ou de U faisant face vers l'extérieur ou vers l'intérieur de la deuxième barre profilée (60).

3. Section de montage selon la revendication 1, dans laquelle ledit siège (S) a une section en forme de C ou de U et comporte des parois de support (66, 68) pour la plus grande surface du panneau (P) qui sont sensiblement parallèles entre elles.

4. Section de montage selon l'une quelconque des revendications précédentes, comprenant des moyens de remplissage (80) entre les parois du siège (S) et le panneau (P).

5. Section de montage selon la revendication 4, dans laquelle lesdits moyens de remplissage comprennent une couche de silicone ou une cale en caoutchouc.

6. Section de montage selon l'une quelconque des revendications précédentes, dans laquelle une ou chacune des parois de support (66, 68) comporte un profilage local (70) qui forme une cavité qui agit comme un canal de drainage pour toute l'eau s'infiltrant entre le panneau et la deuxième barre profilée.

7. Section de montage selon l'une quelconque des revendications précédentes, dans laquelle une ou chacune des extrémités libres s'étend suivant une direction (X) qui est inclinée par rapport au plan (Y) contenant les parois parallèles (66, 68) dudit siège.

8. Section de montage selon la revendication 7, dans laquelle ladite inclinaison est approximativement de 50 degrés.

9. Section de montage selon l'une quelconque des revendications précédentes, dans laquelle les extrémités libres sont d'une longueur qui leur permet de terminer sur un plan commun (Z) qui est incliné par rapport au plan contenant les parois parallèles dudit siège.
